## Europäisches Patentamt

## European Patent Office

## Office européen des brevets

(19)

(11) Veröffentlichungsnummer: **0 141 869**
**B1**

(12) **EUROPÄISCHE PATENTSCHRIFT**

(45) Veröffentlichungstag der Patentschrift:
16.09.87

(51) Int. Cl.⁴: **H 04 N 1/40**

(21) Anmeldenummer: **83111359.2**

(22) Anmeldetag: **14.11.83**

(54) **Verfahren und Einrichtung zur Herstellung gerasterter Druckformen.**

(43) Veröffentlichungstag der Anmeldung:
**22.05.85 Patentblatt 85/21**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**GB - A - 2 026 283**

**PATENTS ABSTRACTS OF JAPAN, Band 6, Nr. 215, 28. Oktober 1982, Seite 1093E138;**

(73) Patentinhaber: **DR.-ING. RUDOLF HELL GmbH, Grenzstrasse 1-5, D-2300 Kiel 14 (DE)**

(72) Erfinder: **Gall, Winrich, Fasanenweg 15, D-2300 Klausdorf (DE)**

ACTORUM AG

## Beschreibung

### Technisches Gebiet

Die Erfindung bezieht sich auf das Gebiet der elektronischen Reproduktionstechnik und betrifft ein Verfahren zur Herstellung von gerasterten Farbauszügen für den Mehrfarbendruck mit Rastern beliebiger Rasterwinkelung und Rasterweite sowie eine Einrichtung zur Durchführung des Verfahrens bei einem Farbscanner.

### Zugrundeliegender Stand der Technik

Beim Farbscanner zur Herstellung von gerasterten Farbauszügen werden durch punkt- und zeilenweise optoelektronische Abtastung einer Farbvorlage drei primäre Farbmesswert-Signale gewonnen, welche ein Mass für die Farbanteile Rot, Grün und Blau der abgetasteten Farben sind. Im Falle eines Vierfarbendrucks korrigiert ein Farbkorrektur-Rechner die Farbmesswert-Signale nach den Gesetzmässigkeiten der subtraktiven Farbmischung in vier Farbauszugs-Signale für die Farbauszüge «Gelb», «Magenta», «Cyan» und «Schwarz». Die Farbauszugs-Signale sind ein Mass für die Rasterpunkt-Grössen, mit denen die Druckfarben «Gelb», «Magenta», «Cyan» und «Schwarz» auf den Druckträger gedruckt werden. Aufzeichnungsorgane in Form von Schreiblampen nehmen die punkt- und zeilenweise Aufzeichnung der vier gerasterten Farbauszüge, auch Farbsatz genannt, auf einem strahlungsempfindlichen Aufzeichnungsmedium vor. Die gerasterten Farbauszüge dienen als Druckformen für den Mehrfarbendruck. In einer Druckmaschine erfolgt dann mit Hilfe der unterschiedlich eingefärbten Druckformen eines Farbsatzes der Übereinanderdruck der Rasterpunkte auf dem Druckträger zu einer mehrfarbigen Reproduktion.

Durch den Übereinanderdruck von Rasterpunkten können Moiré-Muster auftreten, die sich besonders bei Betrachtung des fertigen Drucks störend bemerkbar machen. Die Sichtbarkeit von Moiré-Mustern lässt sich bekanntlich dadurch vermindern, dass die Raster der einzelnen Farbauszüge des Farbsatzes gegeneinander gedreht übereinandergedruckt werden, wozu die Farbauszüge mit Rastern unterschiedlicher Rasterwinkelungen aufgezeichnet werden müssen. Durch den gedrehten Übereinanderdruck der einzelnen Raster wird erreicht, dass die Moiré-Perioden entweder zu klein oder zu gross sind, um im Druck von dem menschlichen Auge als störend wahrgenommen zu werden.

Die Raster der vier Farbauszüge eines Farbsatzes müssen daher mit vier unterschiedlichen Rasterwinkelungen aufgezeichnet werden. Um ein Moiré-Minimum zu erhalten, werden in der Praxis häufig der Farbauszug «Gelb» mit einem Rasterwinkel 0°, der Farbauszug «Magenta» mit einem Rasterwinkel von –15°, der Farbauszug «Cyan» mit einem Rasterwinkel von + 15° und der Farbauszug «Schwarz» mit einem Rasterwinkel von + 45° aufgezeichnet. Bei der Herstellung der Farbauszüge müssen diese Rasterwinkel sehr genau eingehalten werden, da bereits bei kleinen Winkelabweichungen wieder störende Moiré-Muster auftreten können.

Andere Rasterwinkel als die genannten werden dann benötigt, wenn beispielsweise zusätzlich zu den vier Druckfarben weitere Farben gedruckt, andere Druckträger verwendet oder unterschiedliche Rasterweiten übereinandergedruckt werden sollen.

Aus der DE-OS 28 27 596 ist bereits ein Verfahren und eine Einrichtung zur Herstellung von Farbauszügen mit Rastern beliebiger Rasterwinkelung und Rasterweite durch punkt- und zeilenweise Abtastung einer Farbvorlage und durch punkt- und zeilenweise Aufzeichnung von Rasterpunkten mittels eines über ein Aufzeichnungsmedium bewegten Aufzeichnungsorgans bekannt.

Solche Raster oder Rasternetze bestehen bekanntlich aus einer Vielzahl von sich periodisch wiederholenden und aneinandergrenzenden Rastermaschen, in denen in Abhängigkeit von den bei der Vorlagenabtastung ausgemessenen Tonwerten unterschiedlich grosse Rasterpunkte aufgezeichnet werden.

Bei dem bekannten Verfahren ist eine Matrix in eine Anzahl von Matrixelementen unterteilt und jedem Matrixelement ein Raster-Schwellwert zugeordnet, der einem Tonwert entspricht. Die Raster-Schwellwerte der Matrix repräsentieren die sich periodisch wiederholende Grundstruktur für jede Rastermasche des aufzuzeichnenden gedrehten Rasters. Die den einzelnen Matrixelementen zugeordneten Raster-Schwellwerte sind in einer Speichermatrix jeweils auf denjenigen Speicherplätzen abgelegt, die der Lage der entsprechenden Matrixelemente innerhalb der Matrix entsprechen. Das Aufzeichnungsmedium für die Farbauszüge ist in eine Vielzahl von Flächenelementen unterteilt, die in Aufzeichnungsrichtung des Aufzeichnungsorgans und quer dazu ausgerichtet sind. Der Rasterpunkt innerhalb jeder Rastermasche des gedrehten Rasters wird aus aufgezeichneten Flächenelementen zusammengesetzt, wobei die Grösse des Rasterpunktes entsprechend des wiederzugebenden Tonwertes von der Anzahl der belichteten Flächenelemente pro Rastermasche abhängt. Während der Aufzeichnung des gerasterten Farbauszugs überfährt das Aufzeichnungsorgan die einzelnen Flächenelemente Zeile für Zeile, und für jedes überfahrene Flächenelement wird in Abhängigkeit der in der Farbvorlage ausgemessenen Tonwerte überprüft, ob es als Teil eines Rasterpunktes zu belichten ist oder nicht. Bei der Überprüfung wird die Lage des momentan überfahrenen Flächenelementes innerhalb der Rastermasche des gedrehten Rasters koordinatenmässig festgestellt und durch eine entsprechende Adressierung der Speichermatrix derjenige Raster-Schwellwert aufgerufen, dessen Lage innerhalb der Matrix der festgestellten Lage des überfahrenen Flächenelementes in der betreffenden Rastermasche entspricht.

Die Entscheidung über eine evtl. Aufzeichnung des überfahrenen Flächenelementes erfolgt durch Vergleich des der betreffenden Rastermasche zugeordneten Tonwertes mit dem aufgerufenen Raster-Schwellwert, wobei aus dem Vergleich ein Aufzeichnungssignal abgeleitet wird, welches das Aufzeichnungsorgan zur Aufzeichnung des betreffenden Flächenelementes einschaltet oder nicht.

Mit dem bekannten Verfahren lassen sich bei der Herstellung von gerasterten Farbauszügen zwar gedrehte Raster mit beliebigen Rasterwinkeln und Rasterweiten erzeugen, dennoch können gelegentlich noch störende Moiré-Muster auftreten.

Ein Verfahren zur Verringerung solcher Musterbildungen wird schon in der DE-OS 29 29 876 angegeben, aber auch mit diesem Verfahren kann in extremen Fällen eine störende Musterbildung nicht ganz unterdrückt werden.

### Offenbarung der Erfindung

Der im Anspruch 1 angegebenen Erfindung liegt daher die Aufgabe zugrunde, ein Verfahren und eine Einrichtung zur Herstellung von gerasterten Druckformen mit Rastern beliebiger Rasterwinkel und Rasterweiten anzugeben, durch welche die bekannten Verfahren dahin gehend verbessert werden, dass die Ausbildung von störenden Moiré-Mustern nunmehr nahezu ausgeschlossen ist.

Vorteilhafte Weiterbildungen werden in den Unteransprüchen angegeben.

### Kurze Beschreibung der Zeichnungen

Die Erfindung wird im folgenden anhand der Figuren 1-4 näher erläutert. Es zeigen:

Fig. 1 ein Ausführungsbeispiel für eine Einrichtung zur Herstellung von gerasterten Druckformen;

Fig. 2 eine grafische Darstellung zur Erläuterung eines Rasterberges;

Fig. 3a einen vergrösserten Ausschnitt aus dem Aufzeichnungsmedium;

Fig. 3b eine Matrix;

Fig. 4 ein Ausführungsbeispiel für einen Raster-Generator.

### Bester Weg zur Ausführung der Erfindung

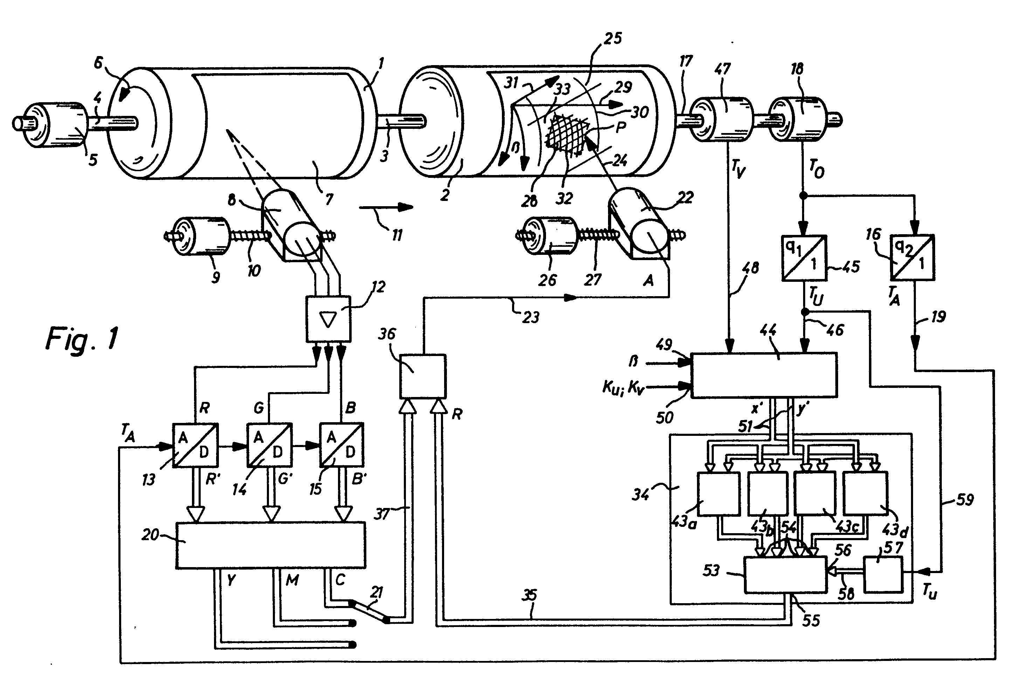

Fig. 1 zeigt ein Ausführungsbeispiel für eine Einrichtung zur Herstellung von gerasterten Farbauszügen mit Rastern beliebiger Rasterwinkelung und Rasterweite bei einem Farbscanner.

Eine Abtasttrommel 1 und eine Aufzeichnungstrommel 2 eines konstruktiv nicht näher dargestellten Farbscanners sind durch eine Welle 3 verbunden und werden gemeinsam über eine Welle 4 von einem Motor 5 in Richtung eines Pfeiles 6 angetrieben. Auf der Abtasttrommel 1 ist eine Farbvorlage 7 aufgespannt, die von einem optoelektronischen Abtastorgan 8 punkt- und zeilenweise abgetastet wird. Die Farbvorlage 7 kann eine Aufsichts- oder Durchsichts-Farbvorlage sein. Das von der abgetasteten Farbvorlage 7 reflektierte oder durchgelassene Abtastlicht wird im optoelektronischen Abtastorgan 8 mit Hilfe von Farbteilern, Korrekturfiltern und optoelektronischen Wandlern in analoge Farbmesswert-Signale R, G und B umgewandelt, welche ein Mass für die Intensitäten der Grundfarbenanteile Rot, Grün und Blau der abgetasteten Farben in der Farbvorlage 7 sind. Das optoelektronische Abtastorgan 8 wird durch einen Motor 9 und eine Spindel 10 axial an der rotierenden Abtasttrommel 1 in Richtung eines Pfeiles 11 entlangbewegt.

Die analogen Farbmesswert-Signale R, G und B gelangen über einen dem optoelektronischen Abtastorgan 8 nachgeschalteten Verstärker 12 auf A/D-Wandler 13, 14 und 15, in denen die Farbmesswert-Signale R, G und B mittels einer Abtasttaktfolge $T_A$ in digitale Farbmesswert-Signale R', G' und B' umgewandelt werden.

Die Abtasttaktfolge $T_A$ entsteht durch Frequenzteilung in einer Teilerstufe 16 aus einer Taktfolge $T_0$, die in einem mit einer Welle 17 der Aufzeichnungstrommel 2 verbundenen Taktgenerator 18 erzeugt wird. Die Abtasttaktfolge $T_A$ wird den A/D-Wandlern 13, 14 und 15 über eine Leitung 19 zugeführt.

In einer digitalen Korrektur-Schaltung 20 werden die digitalen Farbmesswert-Signale R', G' und B' durch eine Farb- und/oder Gradationskorrektur in korrigierte Farbauszugs-Signale Y, M und C für die Herstellung der Farbauszüge «Gelb», «Magenta» und «Cyan» und im Falle eines Vierfarbendrucks zusätzlich noch in das Farbauszugs-Signal K für die Aufzeichnung des Schwarz-Auszuges umgewandelt. Die digitalen Farbauszugs-Signale Y, M und C sind ein Mass für die Tonwerte, die bei der Aufzeichnung der Farbauszüge in entsprechende Rasterpunkt-Grössen umgesetzt werden müssen. Die digitalen Farbauszugs-Signale Y, M und C haben eine Wortlänge von z.B. 8 bit, so dass 256 Grauwerte unterschieden werden können.

Eine digitale Korrektur-Schaltung für Farb- und/oder Gradationsänderungen ist beispielsweise aus der DE-AS 15 97 771 bekannt.

Der Korrektur-Schaltung 20 kann noch eine Einrichtung zur Massstabsänderung zwischen Farbvorlage und Reproduktion vor- oder nachgeschaltet sein, die z.B. nach der DE-PS 11 93 534 ausgebildet ist.

Die digitalen Farbauszugs-Signale Y, M und C gelangen im beschriebenen Ausführungsbeispiel auf einen Auswahlschalter 21, mit dem das für die Aufzeichnung eines der Farbauszüge erforderliche Farbauszugs-Signal Y, M oder C ausgewählt wird. Ein Aufzeichnungsorgan 22 erzeugt mindestens einen, durch ein Aufzeichnungssignal A auf einer Leitung 23 ein- und ausschaltbaren Aufzeichnungsstrahl 24. Der Aufzeichnungsstrahl 24 zeichnet punkt- und zeilenweise die Rasterpunkte des Farbauszuges auf ein strahlungsempfindliches, beispielsweise lichtempfindliches Aufzeichnungsmedium 25 auf, das sich auf der rotierenden Aufzeichnungstrommel 2 befindet, wobei die Rasterpunkt-Grössen durch die bei der Vorlagen-Abtastung gewonnenen Tonwerte bestimmt werden. Das Aufzeichnungsorgan 22 bewegt sich während der Aufzeichnung des Farbauszugs, durch einen Motor 26 und eine Spindel 27 angetrieben, axial in Richtung des Pfeiles 11 an der Aufzeichnungstrommel 2 entlang.

Das Aufzeichnungsmedium 25 ist in eine Vielzahl von Flächenelementen 28 unterteilt zu denken, welche lagemässig durch Koordinatenwerte u und v eines gerätebezogenen, orthogonalen UV-Koordinatensystems 29 definiert sind, dessen U-Koordinatenachse in Aufzeichnungsrichtung (Umfangsrichtung) und dessen V-Koordinatenachse in Vorschubrichtung des Aufzeichnungsorgans 22 (Axialrichtung) orientiert sind. In einem in Richtung des gedrehten Rasters 30 ausgerichteten XY-Koordinatensystem 31, das mit dem gerätebezogenen UV-Koordinatensystem 29 den Rasterwinkel β des gedrehten Rasters 30 einschliesst, werden die einzelnen Flächenelemente 28 durch entsprechende Koordinatenwerte x und y definiert. Die Rasterpunkte innerhalb der Rastermaschen des gedrehten Rasters 30, von denen in der Fig. 1 lediglich ein Rasterpunkt 32 in einer aufgezeichneten Rastermasche 33 angedeutet ist, werden bei der Herstellung des gerasterten Farbauszugs aus aufgezeichneten Flächenelementen 28 zusammengesetzt, wobei jeweils die Anzahl der aufgezeichneten Flächenelemente 28 innerhalb einer Rastermasche 33 die Rasterpunkt-Grösse und die Konstellation dieser Flächenelemente 28 zueinander die Form der Rasterpunkte 32 bestimmen.

Während der Aufzeichnung des Farbauszugs überfährt das Aufzeichnungsorgan 22 durch die Relativbewegung zur Aufzeichnungstrommel 2 die einzelnen Flächenelemente 28 in Aufzeichnungsrichtung, und für jedes überfahrene Flächenelement 28 wird in Abhängigkeit der in der Farbvorlage 7 ausgemessenen Tonwerte festgestellt, ob das momentan überfahrene Flächenelement 28 als Teil eines Rasterpunktes 32 aufzuzeichnen ist oder nicht.

Die Entscheidung über die Aufzeichnung der Flächenelemente 28 wird durch einen Vergleich der ausgemessenen Tonwerte bzw. der Farbauszugswerte Y, M oder C mit ortsabhängigen Raster-Schwellwerten $R_a$ als Entscheidungsschwellen getroffen, wobei aus dem Vergleich das Aufzeichnungssignal A auf der Leitung 23 abgeleitet wird, welches in Abhängigkeit des Vergleichsergebnisses den Aufzeichnungsstrahl 24 zur Aufzeichnung eines Flächenelementes 28 einschaltet oder nicht.

Die Raster-Schwellwerte $R_a$ mit einer Wortlänge von ebenfalls 8 bit wie die Farbauszugswerte werden von einem Raster-Generator 34 bereitgestellt und über Daten-Leitungen 35 einem Vergleicher 36 zugeführt, der ausserdem mit dem ausgewählten Farbauszugswert Y, M oder C auf Daten-Leitungen 37 beaufschlagt ist. Das Ausgangssignal des Vergleichers 36 ist das Aufzeichnungssignal A auf der Leitung 23.

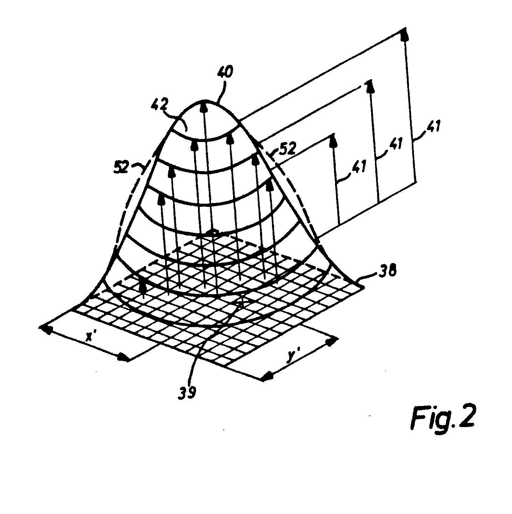

Die Bildung der Raster-Schwellwerte $R_a$ soll zunächst anhand einer grafischen Darstellung in Fig. 2 erläutert werden. Eine Matrix 38 ist in eine Anzahl von Matrixelementen 39 unterteilt, die innerhalb der Matrix 38 lagemässig durch Koordinatenwerte x' und y' bestimmt sind. Die Matrix entspricht der Fläche einer Rastermasche. Jedem Matrixelement 39 mit den Koordinatenwerten x' und y' ist ein Raster-Schwellwert $R_a = f_a (x',y')$ zugeordnet. Die Gesamtheit der Raster-Schwellwerte $R_a$ der Matrix 38 repräsentieren die Grundstruktur einer Rastermasche, die sich periodisch von Rastermasche zu Rastermasche wiederholt.

Werden die den einzelnen Matrixelementen 39 zugeordneten Raster-Schwellwerte $R_a$, wie in Fig. 2 dargestellt, als Koordinatenwerte eines räumlichen Koordinatensystems aufgetragen, so entsteht ein sogenannter Rasterberg 40, dessen Grundfläche auf einer aufzuzeichnenden Rastermasche steht.

Neben dem Rasterberg 40 sind in Richtung der dritten Koordinate verschiedene Tonwerte als Pfeile 41 mit entsprechend unterschiedlichen Längen dargestellt. Wenn nun das Entscheidungskriterium heisst, dass alle diejenigen Flächenelemente innerhalb einer Rastermasche aufgezeichnet werden, deren in der Matrix korrespondierenden Matrixelementen gleiche oder grössere Raster-Schwellwerte als der betreffende Tonwert zugeordnet sind, so entspricht eine in Höhe des betreffenden Tonwertes liegende Querschnittsfläche 42 des Rasterberges 40 der aufzuzeichnenden Rasterpunkt-Grösse für den betreffenden Tonwert.

In dem praktischen Ausführungsbeispiel ist der Rasterberg $R_a = f_a (x',y')$ in einem Matrix-Speicher 43a innerhalb des Raster-Generators 34 der Schaltungsanordnung nach Fig. 1 abgelegt. In dem Matrix-Speicher 43a ist jedem Matrixelement 39 ein Speicherplatz zugeordnet, auf dem der Raster-Schwellwert $R_a$ des zugeordneten Matrixelementes 39 abgelegt ist. Jeder Speicherplatz ist durch diejenige Adresse anwählbar, die den Koordinatenwerten x' und y' des zugeordneten Matrixelementes 39 entspricht. Der Matrix-Speicher 43a möge beispielsweise 32 × 32 Speicherplätze aufweisen, die dann durch 32 x'-Adressen und 32 y'-Adressen anwählbar sind.

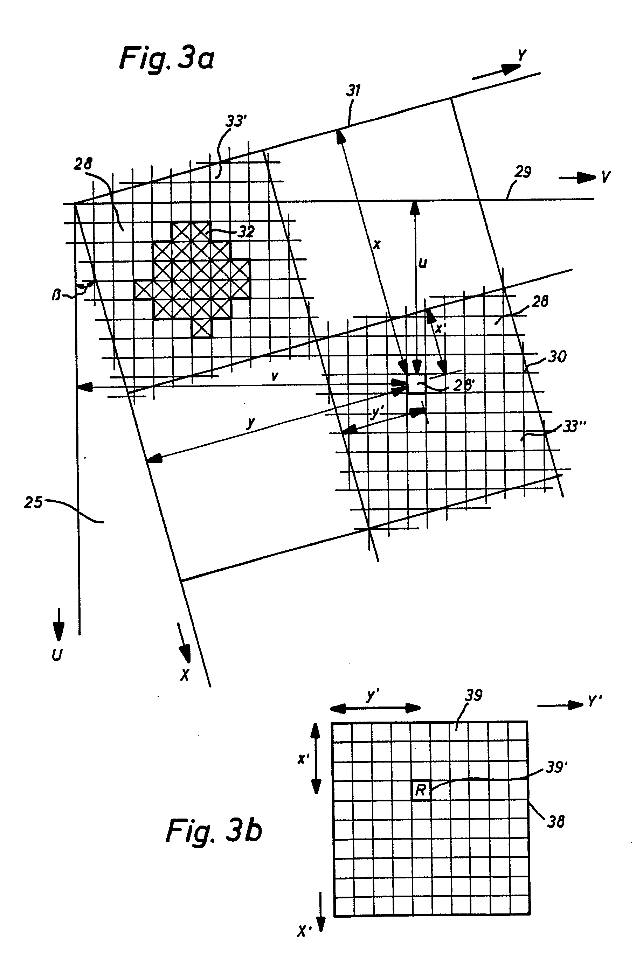

Während der Herstellung des Farbauszugs muss nun für jedes vom Aufzeichnungsorgan 22 überfahrene Flächenelement 28 der ortsmässig zugeordnete Raster-Schwellwert R aus dem Rasterberg 40 ausgewählt und für den Vergleich bereitgestellt werden. Die Auswahl der Raster-Schwellwerte R wird zunächst anhand einer weiteren grafischen Darstellung in Fig. 3 erläutert.

Fig. 3a zeigt einen vergrösserten Ausschnitt aus dem Aufzeichnungsmedium 25 mit dem gerätebezogenen UV-Koordinatensystem 29, dessen Koordinaten-Achsen in Aufzeichnungsrichtung und senkrecht dazu ausgerichtet sind, mit dem gegenüber dem UV-Koordinatensystem 29 um den Rasterwinkel β gedrehten Raster 30 und mit dem XY-Koordinatensystem 31, das in Richtung des gedrehten Rasters 30 ausgerichtet ist und mit dem UV-Koordinatensystem 29 den Rasterwinkel β einschliesst. In den Rastermaschen 33' und 33'' des gedrehten Rasters 30 sind die Flächenelemente 28 angedeutet, in die das Aufzeichnungsmedium 25 unterteilt zu denken ist.

In der Rastermasche 33' bildet die Gesamtheit der aufgezeichneten Flächenelemente 28, die durch gekreuzte Linien markiert sind, einen Rasterpunkt 32. In der Rastermasche 33'' ist ein aufgezeichnetes Flächenelement 28' durch stärkere Linien hervorgehoben. Dieses Flächenelement 28' möge das momentan vom Aufzeichnungsorgan 22 überfahrene Flächenelement sein, für das der ortsmässig zugeordnete Raster-Schwellwert $R_a$ des Rasterberges 40 zur Entscheidung über eine Aufzeichnung oder Nichtaufzeichnung ausgewählt werden muss. Fig. 3b zeigt die Matrix 38 mit den Matrixelementen 39 bzw. den Matrix-Speicher 43a mit seinen Speicherplätzen. Jedes Matrixelement 39 bzw. jeder Speicherplatz ist durch ein Koordinaten-Paar bzw. Adressen-Paar x' und y' definiert. Das Auffinden des für das überfahrene Flächenelement 28' zuständigen Raster-Schwellwertes R geschieht dadurch, dass zunächst die Lage des überfahrenen Flächenelements 28' innerhalb der Rastermasche 33'' und dann das innerhalb der Matrix 38 lagemässig korrespondierende Matrixelement 39' bestimmt wird, welches in Fig. 3b wiederum durch stärkere Linien hervorgehoben ist. Der dem korrespondierenden Matrixelement 39' zugeordnete Raster-Schwellwert R ist der gesuchte Raster-Schwellwert R für den Vergleich.

Dazu werden zunächst die Ortskoordinaten u und v des überfahrenen Flächenelementes 28' im UV-Koordinatensystem 29 ermittelt und daraus die Ortskoordinaten x und y in dem XY-Koordinatensystem 31 gemäss Gleichungen (1) berechnet.

$$x = K_u \cdot u \cdot \cos \beta + K_v \cdot v \cdot \sin \beta$$
$$y = -K_u \cdot u \cdot \sin \beta + K_v \cdot v \cdot \cos \beta \qquad (1)$$

In diesen Gleichungen ist «$\beta$» der Rasterwinkel des aufzuzeichnenden Rasters und die Koeffizienten «$K_u$» und «$K_v$» Massstabsfaktoren.

Dann werden aus den Koordinatenwerten x und y gemäss Gleichungen (2) die Koordinatenwerte x' und y' berechnet, welche die Lage des überfahrenen Flächenelementes 28' innerhalb der Rastermasche 33'' bzw. die Lage des zugehörigen Matrixelementes 39' innerhalb der Matrix 38 und somit auch gleichzeitig die Adresse für den Matrix-Speicher 43a darstellen, unter welcher der für das betreffende Flächenelement 28' repräsentative Raster-Schwellwert R abgelegt ist.

$$x' = x \cdot \bmod x_0$$
$$y' = y \cdot \bmod y_0 \qquad (2)$$

Die Werte $x_0$ und $y_0$ stellen dabei die Anzahl der Matrixelemente 39 innerhalb der Matrix 38 in Richtung des XY-Koordinatensystems 31 dar.

Die Ermittlung der Koordinatenwerte bzw. Adressen x' und y' werden in der Schaltungsanordnung nach Fig. 1 in einer Transformations-Stufe 44 realisiert. Zunächst werden Grundschritte $\Delta u$ und $\Delta v$ definiert, welche der Ausdehnung eines Flächenelementes 28 in Richtung der U-Koordinatenachse und der V-Koordinatenachse entsprechen. Dann werden die Ortskoordinaten u und v durch Zählen der Grundschritte $\Delta u$ und $\Delta v$ mit Hilfe zweier Taktfolgen $T_u$ und $T_v$ in der Transformations-Stufe 44 nach Gleichung (3) ermittelt, wobei $C_u$ und $C_v$ die Anzahl der gezählten Takte der Taktfolgen $T_u$ und $T_v$ sind.

$$u = C_u \cdot \Delta u$$
$$v = C_v \cdot \Delta v \qquad (3)$$

Die Taktfolge $T_u$ wird durch Frequenzteilung in einer Teilerstufe 45 aus der Taktfolge $T_0$ des Taktgenerators 18 gewonnen und der Transformations-Stufe 44 über eine Leitung 46 zugeführt. Jedem Takt der Taktfolge $T_u$ ist ein Grundschritt $\Delta u$ zugeordnet. Die Grundschrittlängen können über die Frequenz der Taktfolge $T_u$ geändert und gegebenenfalls an die geforderte Genauigkeit angepasst werden. Ein Umfangsimpuls-Geber 47, der ebenfalls über die Welle 17 mit der Aufzeichnungstrommel 2 gekoppelt ist, erzeugt nach jedem Vorschubschritt des Abtastorgans 8 und des Aufzeichnungsorgans 22 zur nächsten Zeile einen Umfangsimpuls $T_v$, dem jeweils ein Grundschritt $\Delta v$ zugeordnet ist. Die Umfangsimpulse $T_v$ werden der Transformations-Stufe 44 über eine Leitung 48 zugeführt. Alternativ können die Ortskoordinaten u und v auch durch fortlaufende Addition der Grundschritte $\Delta u$ und $\Delta v$ ermittelt werden, wobei die Takte der Taktfolge $T_u$ und die Umfangsimpulse $T_v$ jeweils einen Additionsschritt einleiten. Die für die Koordinatentransformation nach Gleichung (1) erforderliche Rasterwinkel «$\beta$» und die Massstabsfaktoren «$K_u$» und «$K_v$» werden über Programmiereingänge 49 und 50 in die Transformations-Stufe 44 eingegeben. Die in der Transformations-Stufe 44 erzeugten Koordinatenwerte x' und y' werden über Adress-Leitungen 51 dem Raster-Generator 34 zugeführt.

Erfindungsgemäss ist mindestens eine weitere Matrix mit Raster-Schwellwerten vorgesehen, welche für mindestens einen Tonwertbereich in den Matrizen jeweils unterschiedlich sind. In der beschriebenen Schaltungsanordnung weist der Raster-Generator 34 z.B. drei zusätzliche Matrix-Speicher 43b, 43c und 43d auf, in denen Rasterberge $R_b = f_b(x'y')$, $R_c = f_c(x'y')$ und $R_d = f_d(x'y')$ abgelegt sind, welche sich für mindestens einen Tonwertbereich untereinander und vom Rasterberg $R_a = f_a(x'y')$ des Matrix-Speichers 43a unterscheiden. Ein solcher formmässig geänderter Rasterberg ist in Fig. 2 durch die Verläufe 52 angedeutet. Je nach Ausbildung der Rasterberge sind somit lagemässig übereinstimmenden Matrixelementen bzw. Speicherplätzen gleiche oder unterschiedliche Raster-Schwellwerte Ra, Rb, Rc und Rd zugeordnet. Alle Matrix-Speicher 43a, 43b, 43c und 43d werden über die Adress-Leitungen 51 parallel adressiert.

Durch die parallele Adressierung der Matrix-Speicher 43a, 43b, 43c und 43d mit den Adressen x' und y' werden somit für jedes überfahrene Flächenelement 28 gleichzeitig vier gleiche oder ungleiche Raster-Schwellwerte $R_a$, $R_b$, $R_c$ und $R_d$ ausgelesen, von denen jeweils nur eines per Zufall ausgewählt und an den Verteiler 36 weitergeleitet wird. Zur zufälligen Auswahl der Raster-Schwellwerte $R_a$, $R_b$, $R_c$ und $R_d$ ist im Raster-Generator 34 eine Auswahl-Stufe 53 vorhanden, deren Eingänge 54 mit den auszuwählenden Raster-Schwellwerten $R_a$, $R_b$, $R_c$ und $R_d$ beaufschlagt sind und an deren Ausgang 55 die ausgewählten Raster-Schwellwerte in Abhängigkeit von an einem Steuereingang 56 der Auswahl-Stufe 53 zufällig anliegenden Steuerbits. Die zufälligen Steuerbits werden in einem Pseudo-Zufallsgenerator 57 erzeugt und der Auswahl-Stufe 53 über eine Steuer-Leitung 58 zugeführt. Der Pseudo-Zufallsgenerator 57 wird von der Taktfolge $T_u$ getaktet, die diesem über eine Leitung 59 zugeführt wird.

Da der Vergleich der abgetasteten Tonwerte nunmehr mit zufällig gewonnenen Raster-Schwellwerten erfolgt, ist auch die Entscheidung über eine Aufzeichnung oder Nichtaufzeichnung eines Flächenelementes 28 vom Zufall abhängig, so dass für bestimmte Tonwert-Bereiche, für die die Raster-Schwellwerte in den einzelnen Rasterbergen geändert wurden, die Rasterpunkte mit unterschiedlichen vom Zufall abhängigen Rasterpunkt-Formen aufgezeichnet werden.

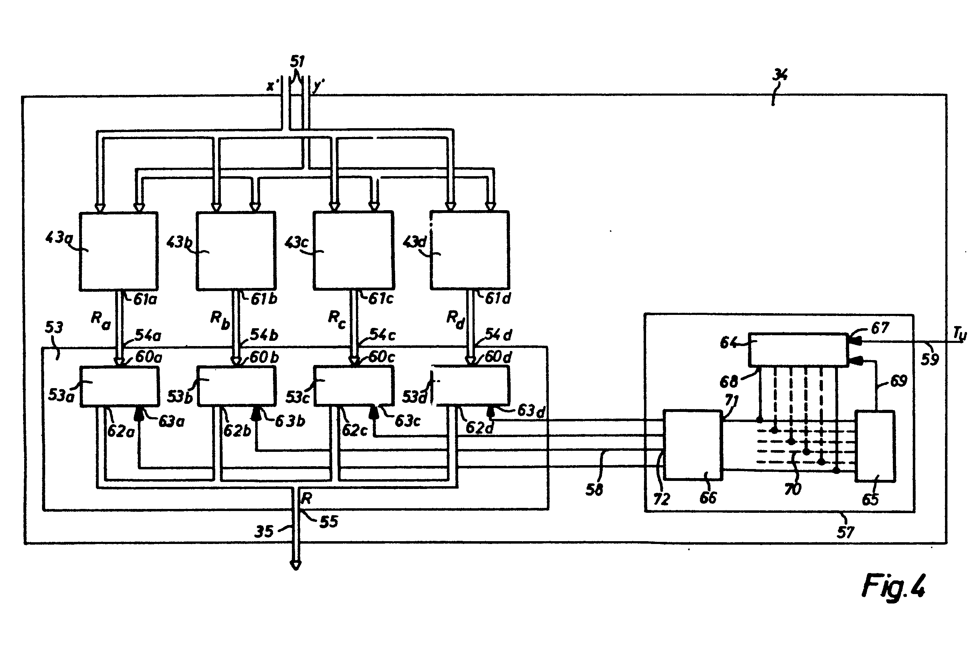

Fig. 4 zeigt ein Ausführungsbeispiel für den Raster-Generator 34 mit den vier Matrix-Speichern 43a, 43b, 43c und 43d, der Auswahl-Stufe 53 und dem Pseudo-Zufallsgenerator 57.

Die Auswahl-Stufe 53 besteht z.B. aus vier Leitungstreibern 53a, 53b, 53c und 53d vom Typ SN 74 LS 244 der Firma Texas Instruments mit Daten-Eingängen 60a, 60b, 60c und 60d, Daten-Ausgängen (3-State-Ausgänge) 62a, 62b, 62c und 62d und mit Steuereingängen 63a, 63b, 63c und 63d. Die Funktionsweise eines solchen Leistungstreibers mit 3-State-Ausgängen ist folgende. Bei L-Pegel des Steuerbits am Steuereingang eines Leistungstreibers liegen die Daten-Ausgänge entsprechend den Pegeln der Information an den zugehörigen Daten-Eingängen auf L- oder H-Pegel, mit anderen Worten, Daten-Eingänge und Daten-Ausgänge sind durchgeschaltet. Bei H-Pegel des Steuerbits sind die Daten-Ausgänge dagegen hochohmig bzw. gesperrt. Im Ausführungsbeispiel sind die Daten-Ausgänge 61a, 61b, 61c und 61d der Matrix-Speicher 43a, 43b, 43c und 43d mit den Daten-Eingängen 60a, 60b, 60c und 60d der Leitungstreiber 53a, 53b, 53c und 53d verbunden, während die Daten-Ausgänge 62a, 62b, 62c und 62d zusammengeschaltet sind und den Daten-Ausgang 55 der Auswahl-Stufe 53 bilden.

Von den im Pseudo-Zufallsgenerator 57 zufällig erzeugten Steuerbits ist immer eines auf L-Pegel, so dass immer nur einer der Matrix-Speicher 43a, 43b, 43c oder 43d per Zufall auf die Datenleitungen 35 geschaltet ist und ein Raster-Schwellwert $R_a$, $R_b$, $R_c$ oder $R_d$ des betreffenden Matrix-Speichers 43a, 43b, 43c oder 43d an den Vergleicher 36 gegeben wird. Der Pseudo-Zufallsgenerator 57 besteht aus einem n-bit-Schieberegister 64, einem Exklusiv-ODER-Rückkopplungsnetzwerk 65 und einem Decoder 66. Der Eingang 67 des Schieberegisters 64 ist mit der Taktfolge $T_u$ auf der Leitung 59 beaufschlagt. Abhängig davon, welche Ausgänge 68 des Schieberegisters 64 über das Rückkopplungsnetzwerk 65 und die Leitung 69 an das Schieberegister 64 rückgeführt werden, entstehen auf den Leitungen 70 quasi zufällige Folgen von sich in einem grossen Zeitintervall wiederholenden Ausgangswerten mit H- oder L-Pegel. Zwei dieser Folgen von Ausgangswerten werden auf die Eingänge 71 des Decoders 66, z.B. vom Typ SN 74 139 N der Firma Texas Instruments, gegeben. In Abhängigkeit der zufälligen H- oder L-Pegel dieser beiden Folgen von Ausgangswerten entstehen an den Ausgängen 72 des Decoders 66 vier Steuerbits, von denen eines per Zufall immer auf L-Pegel liegt.

Die Erfindung ist nicht auf das in Fig. 1 beschriebene Ausführungsbeispiel beschränkt. Es liegt im Rahmen der Erfindung, dass anstelle der Aufzeichnung eines einzelnen, ausgewählten Farbauszugs gleichzeitig alle Farbauszüge mit Hilfe mehrerer Aufzeichnungsorgane und entsprechenden Steuervorrichtungen auf der Aufzeichnungstrommel in Axialrichtung nebeneinander und/oder in Umfangsrichtung seriell hintereinander aufgezeichnet werden. Alternativ zu dem beschriebenen Online-Betrieb kann die Herstellung der Farbauszüge auch im Offline-Betrieb erfolgen. In diesem Falle werden alle bei der Vorlagen-Abtastung gewonnenen Farbauszugswerte in einem Ganzbild-Speicher abgelegt und bei Bedarf zur Aufzeichnung der Farbauszüge abgerufen.

Ferner liegt es im Rahmen der Erfindung, ein Aufzeichnungsorgan zu verwenden, das mehrere, durch entsprechende Aufzeichnungssignale separat ein- und ausschaltbare Aufzeichnungsstrahlen erzeugt und somit gleichzeitig mehrere Flächenelemente aufzeichnet. In diesem Falle weist die Schaltungsanordnung nach Fig. 1, wie z.B. in der DE-OS 28 27 596 ausführlich erläutert, eine der Anzahl von Aufzeichnungsstrahlen entsprechende Anzahl von Raster-Generatoren und Vergleichern auf.

**Patentansprüche**

1. Verfahren zur Herstellung gerasterter Druckformen mit Rastern beliebiger Rasterwinkel und Rasterweiten von Vorlagen mittels eines relativ über ein Aufzeichnungsmedium bewegten Aufzeichnungsorgans, wobei ein Raster aus einer Vielzahl von periodisch wiederholten Rastermaschen besteht, in denen in Abhängigkeit von den Tonwerten der Vorlage unterschiedlich grosse Rasterpunkte aufgezeichnet werden, bei dem

a) die Vorlage zur Gewinnung von Bildsignalwerten, welche ein Mass für die Tonwerte der Vorlage sind, punkt- und zeilenweise optoelektronisch abgetastet wird,

b) eine Matrix mit einer Anzahl von Matrixelementen, deren Lage innerhalb der Matrix durch Koordinatenwerte (x'; y') bestimmt ist, vorgegeben und jedem Matrixelement ein einen Tonwert darstellender Raster-Schwellwert (R) zugeordnet wird, wobei die dreidimensionale Funktion $R = f(x'; y')$ einen die Grundstruktur einer Rastermasche repräsentierenden Rasterberg (40, Fig. 2) bildet, dessen Grundfläche aus Matrixelementen besteht und dessen parallel zur Grundfläche liegenden Querschnittsflächen Form und Grösse der aufzuzeichnenden Rasterpunkte sowie deren Lage innerhalb einer Rastermasche in Abhängigkeit von den Tonwerten definieren,

c) das Aufzeichnungsmedium in eine Vielzahl von in Aufzeichnungsrichtung des Aufzeichnungsorgans ausgerichteten, nebeneinanderliegenden Flächenelementen unterteilt ist, wobei die Rasterpunkte innerhalb jeder Rastermasche aus vom Aufzeichnungsorgan aufgezeichneten Flächenelementen aufgebaut werden,

d) für jedes Flächenelement des Aufzeichnungsmediums innerhalb einer Rastermasche dasjenige Matrixelement festgestellt wird, dessen Lage innerhalb der Matrix der Lage des Flächenelements innerhalb der betreffenden Rastermasche entspricht und der dem festgestellten Matrixelement zugeordnete Raster-Schwellwert (R) aufgerufen wird, und bei dem

e) durch Vergleich des aufgerufenen Raster-Schwellwertes (R) mit mindestens einem Bildsignalwert ein das Aufzeichnungsorgan steuerndes Aufzeichnungssignal gewonnen wird, wobei durch den Signalvergleich entschieden wird, ob das Flächenelement als Teil eines Rasterpunktes innerhalb der betreffenden Rastermasche aufgezeichnet wird oder nicht, dadurch gekennzeichnet, dass zur weiteren Reduzierung von Moiré-Mustern bei der Druckformherstellung

f) mindestens eine weitere Matrix vorgegeben und deren Matrixelementen ebenfalls Raster-Schwellwerte (R) zugeordnet werden, die sich aber von den entsprechenden Raster-Schwellwerten (R) der ersten Matrix für mindestens einen vorgegebenen Tonwert-Bereich unterscheiden, wodurch mindestens ein weiterer Rasterberg (52, Fig. 2) mit einer innerhalb des Tonwert-Bereiches geänderten Form gegenüber der des ersten Rasterberges (40, Fig. 2) gebildet wird,

g) für jedes Flächenelement die lagemässig entsprechenden Matrixelemente innerhalb der Matrizen festgestellt werden, und

h) einer der den festgestellten Matrixelementen zugeordneten Raster-Schwellwerte (R) per Zufall für den Vergleich mit dem Bildsignalwert ausgewählt wird.

2. Verfahren nach Anspruch 1, dadurch gekennzeichnet, dass

a) die Bildsignalwerte digitalisiert und in einem Speicher abgelegt werden, und

b) die gespeicherten Bildsignalwerte zum Vergleich mit den ausgewählten Raster-Schwellwerten aus dem Speicher ausgelesen werden.

3. Verfahren nach einem der Ansprüche 1-2, dadurch gekennzeichnet, dass jedem Matrixelement einer Matrix ein Speicherplatz in einem Matrix-Speicher derart zugeordnet wird, dass die Adresse des betreffenden Speicherplatzes den Koordinatenwerten (x',y') des zugeordneten Matrixelementes entspricht.

4. Verfahren nach einem der Ansprüche 1-3, dadurch gekennzeichnet, dass

a) erste Koordinatenwerte (u, v) der momentan vom Aufzeichnungsorgan überfahrenen Flächenelemente in einem ersten orthogonalen Koordinatensystem (UV) gemessen werden, welches in Aufzeichnungsrichtung des Aufzeichnungsorgans und senkrecht dazu ausgerichtet ist,

b) die ersten Koordinatenwerte (u, v) der momentan überfahrenen Flächenelemente in zweite Koordinatenwerte (x, y) eines zweiten orthogonalen Koordinatensystems (XY) umgewandelt werden, welches in Richtung des gedrehten Rasters ausgerichtet ist und mit dem ersten Koordinatensystem (UV) einen vorherbestimmten Rasterwinkel einschliesst, wobei die zweiten Koordinatenwerte (x, y) die Lage der betreffenden Flächenelemente im gedrehten Raster definieren,

c) die zweiten Koordinatenwerte (x, y) der momentan überfahrenen Flächenelemente im gedrehten Raster in die Adressen (x', y') derjenigen Speicherplätze in den Matrix-Speichern umgewandelt werden, deren zugeordnete Matrixelemente jeweils dieselbe Lage innerhalb der einzelnen Matrizen aufweisen wie die überfahrenen Flächenelemente innerhalb der zugehörigen Rastermaschen des gedrehten Rasters, und

d) die durch die Adressen (x', y') in den einzelnen Matrix-Speichern angewählten Raster-Schwellwerte aufgerufen werden.

5. Verfahren nach Anspruch 4, dadurch gekennzeichnet, dass die ersten Koordinatenwerte (u, v) in die zweiten Koordinatenwerte (x, y) nach der Beziehung:

$$x = K_u \cdot u \cdot \cos \beta + K_v \cdot v \cdot \sin \beta$$
$$y = -K_u \cdot u \cdot \sin \beta + K_v \cdot v \cdot \cos \beta$$

umgerechnet werden, wobei «$\beta$» der vorherbestimmte Rasterwinkel sowie «$K_u$» und «$K_v$» Massstabsfaktoren sind.

6. Verfahren nach Anspruch 4 oder 5, dadurch gekennzeichnet, dass die zweiten Koordinatenwerte (x, y) nach den Gleichungen:

$$x' = x \cdot \mod x_0$$
$$y' = y \cdot \mod y_0$$

in die entsprechenden Adressen (x', y') der Matrix-Speicher umgerechnet werden, wobei $x_0$ und $y_0$ die Anzahl der Matrixelemente der Matrizen in Richtung des zweiten orthogonalen Koordinatensystems (XY) sind.

7. Verfahren nach Anspruch 6, dadurch gekennzeichnet, dass

a) die zweiten Koordinatenwerte (x, y) digitale Werte sind, und

b) die Umformung der digitalen zweiten Koordinatenwerte (x, y) in die Adressen (x', y') digital durch Abstreifen von bits höherer Werte der digitalen zweiten Koordinatenwerte (x, y) durchgeführt wird.

8. Verfahren nach den Ansprüchen 1-7, dadurch gekennzeichnet, dass

a) die Flächenelemente einer Anzahl von Zeilen gleichzeitig mittels einer entsprechenden Anzahl von Aufzeichnungselementen des Aufzeichnungsorgans aufgezeichnet werden, die durch einzelne Aufzeichnungssignale separat gesteuert werden, und

b) die einzelnen Aufzeichnungssignale für die Aufzeichnungselemente jeweils durch Vergleich der für die einzelnen Flächenelemente repräsentativen ausgewählten Raster-Schwellwerte mit dem Bildsignalwert gewonnen werden.

9. Verfahren nach Anspruch 8, dadurch gekennzeichnet, dass die zweiten Koordinatenwerte ($x_n$, $y_n$) der gleichzeitig von den Aufzeichnungselementen des Aufzeichnungsorgans überfahrenen Flächenelemente (n) aus den berechneten Koordinatenwerten (x, y) eines der Flächenelemente durch Addieren von konstanten Beträgen ermittelt werden, welche die Abstände der entsprechenden Flächenelemente von dem einen Flächenelement darstellen.

10. Anordnung zur Durchführung des Verfahrens nach Anspruch 1, bestehend aus:

a) einer optoelektronischen Abtast-Einrichtung zur Gewinnung von Bildsignalwerten durch punkt- und zeilenweise Abtastung einer Vorlage,

b) einem Aufzeichnungsorgan zur zeilenweisen Aufzeichnung von Rasterpunkten auf einem Aufzeichnungsmedium, wobei das Aufzeichnungsorgan durch ein Aufzeichnungssignal steuerbar ist und sich relativ zu dem Aufzeichnungsmedium bewegt,

c) einer Koordinatenerfassungs-Einrichtung zur laufenden Ermittlung der Koordinatenwerte von momentan vom Aufzeichnungsorgan überfahrenen Flächenelementen des Aufzeichnungsmediums in einem orthogonalen und in Zeilenrichtung orientierten Koordinatensystem,

d) einer Koordinatentransformations-Einrichtung, welche an die Koordinaten-Erfassungseinrichtung angeschlossen ist zur Umwandlung der Koordinatenwerte in Adressen,

e) einem Raster-Generator, welcher mit der Koordinatentransformations-Einrichtung in Verbindung steht, mit einem durch die berechneten Adressen anwählbaren Matrix-Speicher zur Ablage von Raster-Schwellwerten, und aus

f) einer Vergleichs-Stufe, welche an den Raster-Generator, die Abtast-Einrichtung und an das Aufzeichnungsorgan angeschlossen ist, zur Erzeugung des Aufzeichnungssignals durch Vergleich von Bildsignalwerten und adressierten Raster-Schwellwerten, dadurch gekennzeichnet, dass der Raster-Generator (34) folgende zusätzliche Baugruppen aufweist:

a) mindestens einen weiteren mit der Koordinatentransformations-Einrichtung (44) verbundenen Matrix-Speicher (43a; 43b; 43c; 43d) in dem Raster-Schwellwerte abgelegt sind, welche für mindestens einen Tonwertbereich in den Matrix-Speichern (43a; 43b; 43c; 43d) jeweils unterschiedlich sind,

b) eine Auswahl-Stufe (53), deren Eingänge an die Matrix-Speicher (43a; 43b; 43c; 43d) und dessen Ausgang an die Vergleicher-Stufe (36) angeschlossen ist, zur Auswahl eines der adressierten Raster-Schwellwerte in Abhängigkeit eines zufällig erzeugten Steuersignals und

c) einen Zufalls-Generator (57), welcher mit der Auswahl-Stufe (53) verbunden ist und das zufällige Steuersignal erzeugt.

## Claims

1. Process for the production of half-tone printing blocks having screens of optional screen angles and screen line spacings from originals by means of a recording element moved relatively over a recording medium, wherein a screen consists of a plurality of periodically repeated screen grid elements, wherein screen dots of different size are recorded as a function of the tonal values of the original, in which:

a) the original is scanned opto-electrically dot by dot and line by line to obtain image signal values which are a measure for the tonal values of the original,

b) a matrix is preset with a number of matrix elements whose locations within the matrix are determined by co-ordinate values (x'; y'), and each matrix element has allocated to it a screen threshold value (R) representing a tonal value, the three-dimensional function R = f (x'; y') forming a screen hill (40, Fig. 2) representing the fundamental structure of a screen grid element, the base area of which is formed by matrix elements and whose cross-sectional areas lying parallel to the base area define the shape and size of the screen dots which are to be recorded as well as their position within a screen grid element as a function of the tonal values,

c) the recording medium is subdivided into a plurality of adjacent areal elements aligned in the recording direction of the recording element the screen dots being built up within each screen grid element from areal elements recorded by the recording element,

d) the particular matrix element whose location within the matrix corresponds to the position of the areal element within the screen grid element in question is determined for each areal element of the recording medium, and the screen threshold value (R) allocated to the matrix element determined is called up, and in which

e) a recording signal controlling the recording element is obtained by comparison of the screen threshold value (R) called up with at least one image signal value, the signal comparison leading to the decision whether the areal element is or is not recorded as part of a screen dot within the screen grid element in question, characterized in that for the purpose of complementary reduction of Moiré patterns during printing block production,

f) at least one other matrix is preset and its matrix elements also have screen threshold values (R) allocated to them, which differ, however, for at least one preset tonal value range from the corresponding screen threshold values (R) of the first matrix, thereby forming at least one other screen hill (52, Fig. 2) having a shape altered, with respect to that of the first screen hill (40, Fig. 2) within the tonal value range,

g) the positionally corresponding matrix elements within the matrices are determined for each areal element, and,

h) one of the screen threshold values (R) allocated to the matrix elements determined is selected at random for comparison to the image signal value.

2. Process according to claim 1, characterized in that

a) the image signal values are digitalized and stored in a memory, and that

b) the stored image signal values are read out of the memory for comparison with the selected screen threshold values.

3. Process according to one of the claims 1 and 2, characterized in that each matrix element has allocated to it a storage location within a matrix memory, in such manner that the address of the storage location in question corresponds to the co-ordinate values (x', y') of the matrix element allocated.

4. Process according to one of the claims 1-3, characterized in that

a) first co-ordinate values (u, v) of the areal elements momentarily traversed by the recording element are measured in a first orthogonal co-ordinate system (UV) which is aligned in the recording direction of the recording element and at right angles thereto,

b) the first co-ordinate values (u, v) of the momentarily traversed area elements are transformed into second co-ordinate values (x, y) of the second orthogonal co-ordinate system (XY) which is aligned in the direction of the rotated screen and subtends a predetermined screen angle with the first co-ordinate system (UV), the second co-ordinate values (x, y) defining the position of the areal elements in question within the rotated screen,

c) the second co-ordinate values (x, y) of the momentarily traversed areal elements in the rotated screen are transformed into the addresses (x', y') of the storage locations in the matrix memories whose associated matrix elements in each case have the same position within the separate matrices as the traversed areal elements within the corresponding screen grid elements of the rotated screen, and

d) the screen threshold values selected in the individual matrix memories by means of the addresses (x', y') are called up.

5. Process according to claim 4, characterized in that the first co-ordinate values (u, v) are converted mathematically into the second co-ordinate values (x, y) on the basis of the relationships:

$$x = K_u \cdot u \cdot \cos \beta + K_v \cdot v \cdot \sin \beta$$
$$y = -K_u \cdot u \cdot \sin \beta + K_v \cdot v \cdot \cos \beta$$

«$\beta$» being the predetermined screen angle, and «$K_u$» and «$K_v$», being scale factors.

6. Process according to claim 4 or 5, characterized in that the second co-ordinate values (x, y) are converted mathematically into the corresponding addresses (x', y') of the matrix memories according to the equations

$$x' = x \cdot \mod x_0$$
$$y' = y \cdot \mod y_0$$

$x_0$ and $y_0$ being the numbers of the matrix elements of the matrices in the direction of the second orthogonal co-ordinate system (XY).

7. Process according to claim 6, characterized in that

a) the second co-ordinate values (x, y) are digital values, and

b) the conversion of the digital second co-ordinate values (x, y) into the addresses (x', y') is performed digitally by stripping off of bits of higher value of the digital second co-ordinate values (x, y).

8. Process according to claims 1-7, characterized in that

a) the areal elements of a number of lines are simultaneously recorded by means of a corresponding number of recording elements of the recording unit, which are controlled separately by means of individual recording signals, and

b) the separate recording signals for the recording elements are obtained in each by comparison between the selected screen threshold values representing the individual areal elements, and the image signal value.

9. Process according to claim 8, characterized in that the second co-ordinate values $(x_n, y_n)$ of the areal elements (n) simultaneously traversed by the recording elements of the recording unit are determined from the calculated co-ordinate values (x, y) of one of the areal elements by addition of constant quantities, which represent the distances of the corresponding areal elements from the one areal element.

10. Arrangement for carrying out the process according to claim 1, comprising:

a) an opto-electronic scanning unit for obtaining image signal values by dotwise and linewise scanning of an original,

b) a recording unit for linewise recording of screen dots on a recording medium, the recording unit being controllable by means of a recording signal and being moved with respect to the recording medium,

c) a co-ordinate detection circuit for current determination of the co-ordinate values of areal elements of the recording medium momentarily traversed by the recording unit within an orthogonal co-ordinate system aligned in the direction of the lines,

d) a co-ordinate conversion circuit which is connected to the co-ordinate detection circuit for conversion of the co-ordinate values into addresses,

e) a screen generator which is in communication with the co-ordinate conversion circuit, comprising a matrix memory addressable by means of the addresses calculated and intended for storage of screen threshold values, and

f) a comparator stage which is connected to the screen generator, the scanning unit and the recording unit, for generating the recording signal by comparison of image signal values and of addressed screen threshold values, characterized in that the screen generator (34) has the following additional components:

a) at least one other matrix memory (43a; 43b; 43c; 43d) connected to the co-ordinate conversion circuit (44), in which are stored screen threshold values which in each case differ for at least one tonal value range in the matrix memories (43a; 43b; 43c; 43d),

b) a selector stage (53) the input terminals of which are connected to the matrix memories (43a; 43b; 43c; 43d) and the output terminal of which is connected to the comparator stage (36), for selection of one of the addressed screen threshold values as a function of a random control signal, and

c) a random generator (57) which is connected to the selector stage (53) and generates the random control signal.

**Revendications**

1. Procédé pour réaliser à partir de modèles des clichés d'impressions tramés, avec des trames ayant des angles de la trame et des lignages de trame quelconques, au moyen d'un organe d'enregistrement animé d'un déplacement relatif au-dessus d'un support d'enregistrement, une trame étant constituée d'une pluralité de mailles de trame se répétant périodiquement, dans lesquelles sont enregistrés, en fonction des valeurs de tonalités du modèle, des points de trame de grandeurs différentes, procédé dans lequel:

a) le modèle est balayé opto-électriquement par point et par ligne pour obtenir des valeurs de signaux d'image qui constituent une mesure pour les valeurs de tonalité du modèle,

b) une matrice, comportant un certain nombre d'éléments de matrice, dont la position à l'intérieur de la matrice est déterminée par des valeurs de coordonnées (x'; y'), est prédéfinie et, à chaque élément de matrice, est associée une valeur de seuil de trame (R) représentant une valeur de tonalité, la fonction tridimensionelle R = f (x'; y') constituant un montagne de trame (40, figure 2) représentant la structure de base d'une maille de trame, dont la surface de base est constituée d'éléments de matrice, et dont les surfaces de coupe transversale parallèles à cette surface de base définissent la forme et la grandeur des points de trame à enregistrer, ainsi que leurs positions à l'intérieur d'une maille de trame en fonction des valeurs de tonalité,

c) le support d'enregistrement est subdivisé en une pluralité d'éléments de surface contigus, orientés dans la direction d'enregistrement de l'organe d'enregistrement, les points de trame à l'intérieur de chaque maille de trame étant constitués d'éléments superficiels enregistrés par l'organe d'enregistrement,

d) pour chaque élément de surface du support d'enregistrement, on détermine à l'intérieur d'une maille de trame, l'élément de matrice dont la position à l'intérieur de la matrice correspond à la position de l'élément de surface à l'intérieur de la maille de trame concernée, et la valeur de seuil de trame (R) associée à l'élément de matrice ainsi déterminé, est appelée,

e) par comparaison de la valeur de seuil de trame (R) ainsi appelée, avec au moins une valeur de signal d'image, on obtient un signal d'enregistrement commandant l'organe d'enregistrement, la comparaison des signaux déterminant si l'élément de surface, en tant que partie d'un point de trame, est enregistrée ou non à l'intérieur de la maille de trame concernée, procédé caractérisé en ce que, pour permettre de réduire davantage encore les moirures, lors de la réalisation du cliché d'impression:

f) au moins une autre matrice est prédéfinie, et aux éléments de cette matrice sont également associées des valeurs de seuil de trame (R) qui se différencient toutefois des valeurs correspondantes de seuil de trame (R) de la première matrice, pour au moins une zone de valeur de tonalité prédéfinie, grâce à quoi il est formé au moins un autre montagne de trames (52, figure 2), avec une forme modifiée à l'intérieur de la zone de valeur de tonalité, par rapport à la forme du premier montagne de trame (40, figure 2),

g) pour chaque élément de surface, on détermine à l'intérieur des matrices, les éléments de matrice correspondant en position,

h) une des valeurs de seuil de trame (R) associée aux éléments de matrice ainsi déterminés, est sélectionnée au hasard pour la comparaison avec la valeur de signal d'image.

2. Procédé selon la revendication 1, caractérisé en ce que:

a) les valeurs de signaux d'image sont mises sous forme numérique et déposées dans une mémoire,

b) les valeurs de signaux d'image ainsi mémorisées sont extraites de la mémoire pour être comparées avec les valeurs de seuil de trame sélectionnées.

3. Procédé selon une des revendications 1 et 2, caractérisé en ce qu'à chaque élément d'une matrice est associé un emplacement de mémoire dans une mémoire de matrice, de façon que l'adresse de l'emplacement de mémoire concernée corresponde aux valeurs de coordonnées (x', y') de l'élément de matrice associé.

4. Procédé selon une des revendications 1 à 3, caractérisé en ce que:

a) deux premières valeurs de coordonnées (u, v) des éléments de surface momentanément balayés par l'organe d'enregistrement, sont mesurées dans un premier système orthogonal de coordonnées (U, V), qui est orienté dans la direction d'enregistrement et perpendiculairement à celle-ci,

b) ces premières valeurs de coordonnées (u, v) des éléments de surface momentanément balayés, sont converties en deux secondes valeurs de coordonnées (x, y), d'un second système orthogonal de coordonnées (XY), qui est orienté en direction de la trame décalée en rotation et qui délimite avec le premier système de coordonnées (UV) un angle de trame préalablement déterminé, les deux valeurs de coordonnées (x, y) définissant la position des éléments de surface concernés dans la trame décalée en rotation,

c) les deuxièmes valeurs de coordonnées (x, y) des éléments de surface momentanément balayés dans la trame décalée en rotation, sont converties en les adresses (x', y') des emplacements de mémoire dans les mémoires de matrice, emplacements sont les éléments de matrice qui leur sont associés ont respectivement les mêmes positions à l'intérieur des différentes matrices, que les éléments de surface balayés à l'intérieur des mailles de trame correspondantes de la trame décalée en rotation,

d) les valeurs de seuil de trame, sélectionnées par les adresses (x', y') dans les différentes mémoires de matrice, sont appelées.

5. Procédé selon la revendication 4, caractérisé en ce que les premières valeurs de coordonnées (u, v) sont converties par le calcul en secondes valeurs de coordonnées (x, y), selon les relations:

$$x = K_u \cdot u \cdot \cos \beta + K_v \cdot v \cdot \sin \beta$$
$$y = -K_u \cdot u \cdot \sin \beta + K_v \cdot v \cdot \cos \beta$$

«β» étant l'angle de trame préalablement déterminé, tandis que «$K_u$» et «$K_v$» sont des facteurs d'échelles.

6. Procédé selon la revendication 4 ou 5, caractérisé en ce que les secondes valeurs de coordonnées (x, y) sont converties par le calcul en les adresses correspondantes (x', y') de la mémoire de matrice selon les égalités:

$$x' = x \cdot \bmod x_0$$
$$y' = y \cdot \bmod y_0$$

$x_0$ et $y_0$ étant le nombre des éléments des matrices en direction du second système orthogonal de coordonnées (XY).

7. Procédé selon la revendication 6, caractérisé en ce que:

a) les secondes valeurs de coordonnées (x, y) sont des valeurs numériques,

b) la conversion des secondes valeurs numériques de coordonnées (x, y) en les adresses (x', y') s'effectue numériquement par suppression de chiffres binaires des valeurs les plus élevées dans les secondes valeurs numériques de coordonnées (x, y).

8. Procédé selon l'une des revendications 1 à 7, caractérisé en ce que:

a) les éléments de surface d'un certain nombre de lignes sont enregistrés simultanément au moyen d'un nombre correspondant d'éléments d'enregistrement de l'organe d'enregistrement, éléments qui sont commandés séparément par des signaux d'enregistrement distincts,

b) ces signaux d'enregistrement distincts pour les éléments d'enregistrement étant respectivement obtenus par comparaison avec la valeur de signal d'image des valeurs de seuil de trame sélectionnées, représentatives des différents éléments de surface.

9. Procédé selon la revendication 8, caractérisé en ce que les secondes valeurs de coordonnées $(x_n, y_n)$ des éléments de surface (n) balayés simultanément par les éléments d'enregistrement de l'organe d'enregistrement, sont déterminées à partir des valeurs de coordonnées calculées (x, y) d'un des éléments de surface, par addition de valeurs constantes, qui représentent les distances entre cet élément de surface et les éléments de surface correspondants.

10. Dispositif pour la mise en oeuvre du procédé selon la revendication 1, dispositif comportant:

a) un moyen de balayage opto-électronique pour obtenir des valeurs de signaux d'image en balayant un modèle par point et par ligne,

b) un organe d'enregistrement pour l'enregistrement par ligne de points de trame sur un support d'enregistrement, cet organe d'enregistrement étant susceptible d'être commandé par l'intermédiaire d'un signal d'enregistrement et se déplaçant par rapport au support d'enregistrement,

c) un moyen de détection de coordonnées pour déterminer couramment des valeurs de coordonnées, d'éléments de surface du support d'enregistrement balayés par l'organe d'enregistrement, dans un système orthogonal de coordonnées orienté dans la direction des lignes,

d) un moyen de transformation de coordonnées qui est raccordé au moyen de détection de coordonnées pour convertir en adresses les valeurs de coordonnées,

e) un générateur de trame qui est en liaison avec le moyen de transformation de coordonnées, et qui comporte une mémoire de matrice susceptible d'être sélectionnée par les adresses ainsi calculées, afin d'y déposer des valeurs de seuil de trame,

f) un étage de comparaison, raccordé au générateur de trame, au moyen de balayage, et à l'organe d'enregistrement, qui permet d'obtenir le signal d'enregistrement par comparaison entre les valeurs de signaux d'image et les valeurs de seuil de trame ainsi adressées, dispositif caractérisé en ce que le générateur de trame (34) comporte les groupes constitutifs supplémentaires suivants:

a) au moins une autre mémoire de matrice (43a; 43b; 43c; 43d), reliée au moyen (44) de transformation des coordonnées, et dans laquelle sont déposées des valeurs de seuil de trame qui, pour au moins une zone de valeurs de tonalité, sont respectivement dans les mémoires de matrice (43a; 43b; 43c; 43d),

b) un étage de sélection (53) dont les entrées sont raccordées à la mémoire de matrice (43a; 43b; 43c; 43d) et dont la sortie est raccordée à l'étage de comparaison (36) pour permettre de sélectionner une des valeurs de seuil de trame ainsi adressée en fonction d'un signal de commande obtenu au hasard,

c) un générateur aléatoire (57), relié à l'étage de sélection (53), et qui engendre le signal de commande choisi au hasard.

Fig. 1

Fig.2

Fig. 3a

Fig. 3b

Fig.4